# EUROPÄISCHE PATENTSCHRIFT

(11) **EP 2 647 764 B1**
(45) Veröffentlichungstag und Bekanntmachung des Hinweises auf die Patenterteilung: **23.04.2014**
(21) Anmeldenummer: 13001433.5
(22) Anmeldetag: 20.03.2013
(51) Int. Cl.: E02B 17/00, F03D 11/04, E04H 12/00

(54) **Übergangsstück zur Verbindung eines Turm- oder Mastfußes mit dem oberen Ende einer gitterartigen Gründungsstruktur im Offshore-Bereich**
Transition piece for connecting a tower or mast foot with the upper end of a grid-like foundation structure in the offshore area
Pièce de transition destinée à relier un pied de tour ou de mât à l'extrémité supérieure d'une structure de fondation en treillis dans la zone en mer

(30) Priorität: 04.04.2012 DE 102012006851
(43) Veröffentlichungstag der Anmeldung: 09.10.2013
(73) Patentinhaber: STRABAG Offshore Wind GmbH, 70567 Stuttgart (DE)
(72) Erfinder: Manthey, Marc, 70565 Stuttgart (DE); Rossow, Hans-Adalbert, 178437 Stralsund (DE); Lang Dr., Michael, 70567 Stuttgart (DE); Röhm, Dr., Jochen, 70437 Stuttgart (DE); Tröger, Andreas, 06122 Halle (DE)
(74) Vertreter: Riedel, Peter

(56) Entgegenhaltungen:
- EP-A1- 2 333 163
- EP-A2- 2 290 237
- WO-A1-2006/004417
- WO-A2-2011/070325

## Beschreibung

Die Erfindung betrifft ein Übergangsstück zur Verbindung eines Turm- oder Mastfußes mit dem oberen Ende einer gitterartigen Gründungsstruktur im Offshore-Bereich der im Oberbegriff des Anspruchs 1 angegebenen Gattung.

Aus der DE 10 2006 056 274 B4 ist ein Turm einer Windkraftanlage bekannt. Diese Anordnung umfasst ein Unterteil in Form eines Gitterturms mit wenigstens drei Eckstielen und ein Oberteil in Form eines im Wesentlichen im Querschnitt runden Rohrturms. Dabei ist im Übergangsbereich der obere Anschlussbereich des Gitterturms mittels eines Übergangskörpers mit dem oberen Anschlussbereich des Rohrturms verbunden. Der Übergangskörper ist in Form eines Kegelstumpfinantels ausgebildet, wobei die Eckstiele in den Übergangsbereich hineinreichen und im Übergangsbereich zwischen dem oberen Anschlussbereich des Gitterturms und dem unteren Anschlussbereich des Rohrturms mit dem Kegelstumpfmantel wenigstens abschnittsweise verbunden sind.

Die EP 2 333 163 A1 beschreibt ein Offshore-Bauwerk, welches eine Gründungsstruktur mit Säulen und ein Übergangsstück mit darauf zu montierendem Turm einer Windenergieanlage umfasst. Das Übergangsstück ist zylindrisch gestaltet und weist an seiner Mantelfläche angeschweißte Platten auf, die in Schlitze von Säulen der Gründungsstruktur greifen und mit den Säulen verschweißt sind.

Die WO 2011/070 325 A2 beschreibt ein Verbindungsstück zwischen dem Mastfuß und dem oberen Ende einer gitterartigen Gründungsstruktur. Das Verbindungsstück umfasst einen Zylinder und räumliche Kastenträger. Die Kastenträger nehmen die oberen Enden der Hauptstreben der Gründungsstruktur auf. Die Kastenträger weisen vertikale Kastenseitenwände auf und sind mit den Hauptstreben und mit dem Zylinder verschweißt.

Die DE 20 2009 018 011 U1 offenbart eine Windkraftanlage mit drei rohrförmigen Gründungstürmen, die aus einzelnen Turmsegmenten bestehen. Am oberen Ende der Gründungstürme ist eine Zwischenplattform befestigt. Auf der Zwischenplattform ist der Mastturm angeordnet. Durch Kniebleche ist der Mastturm stabilisiert.

Die DE 20 2004 006 633 U1 zeigt ein Verbindungsstück, welches den Mastturm mit dem Gittermast verbindet. Am Verbindungsstück angeordnete Pratzen lagern auf den Hauptstreben des Gittermasts auf. Die Pratzen sind über Kragarme mit dem Zylinder verbunden. Der Zylinder umfasst am oberen und unteren Ende je eine Abschlussplatte, die mittig geöffnet ist, um den Zugang ins Innere des Mastturmes zu gewährleisten.

Der vorliegenden Erfindung liegt die Aufgabe zugrunde, ein Übergangsstück der eingangs genannten Gattung zu schaffen, das einfach herstellbar ist und bei dem eine momentenarme Krafteinleitung in die gitterartige Gründungsstruktur erfolgt.

Diese Aufgabe wird durch ein Übergangsstück zur Verbindung eines Turm- oder Mastfußes mit dem oberen Ende einer gitterartigen Gründungsstruktur mit den Merkmalen des Anspruchs 1 gelöst.

Die Verbindung des zylindrischen Übergangsstücks mit räumlichen Kastenträgern bietet eine große Anschlusssteifigkeit und verhindert das Beulen von Einzelblechen. Außerdem ist durch ein solches Übergangsstück die Möglichkeit gegeben, auf einfache Weise einen Toleranzausgleich beim Zusammenbau mit der Hauptstruktur zu schaffen. Gemäß der Erfindung umfasst der Kastenträger zwei vertikale Kastenseitenwände sowie einen oberen Kastenflansch und einen unteren Kastenflansch, die sich orthogonal zu den Kastenseitenwänden erstrecken, wobei die Kastenseitenwände mit den Kastenflanschen verschweißt sind. Der Versatz zwischen dem Zylinder des Übergangsstücks und den Hauptstreben ist gering. Daher erfolgt der Kraftfluss zur Aufnahme des Anlagenmoments maßgeblich über die vertikalen Kastenseitenwände. Weiter sind an den vorderen Kanten der Kastenseitenwände schräg nach unten verlaufende Stimbleche angeordnet und an diesen angeschweißt, um eine momentenarme Krafteinleitung in die gitterartige Gründungsstruktur zu ermöglichen. Zwischen den Stimblechen ist ein Abstand vorgesehen, der dem Außendurchmesser der Hauptstrebe entspricht. Die Schrägstellung entspricht dabei der Längsrichtung der Hauptstreben, und aufgrund des gewählten Abstands liegen die Stimbleche an der Hauptstrebe an und sind mit dieser verschweißbar. Auf dem oberen Kastenflansch sind zwei bündig zu den Kastenseitenwänden verlaufende Kniebleche vorgesehen, die mit dem Kastenflansch und dem Zylinder verschweißt sind. Diese Kniebleche dienen zur ermüdungstechnisch vorteilhaften Lastein- und Lastausleitung aus dem Zylinder.

Vorzugsweise weisen der obere Kastenflansch und der untere Kastenflansch auf ihrer dem Zylinder zugewandten Seite eine Kontur auf, die dem Außendurchmesser des Zylinders entspricht. Auf diese Weise ist es möglich, die Kastenflansche ebenso wie die Kastenseitenwände an dem Zylinder anzuschweißen. Außerdem ist es vorteilhaft, dass der untere Kastenflansch an seiner der Hauptstrebe zugewandten Seite eine Kontur aufweist, die dem Außendurchmesser der Hauptstrebe entspricht, so dass der untere Kastenflansch an der Hauptstrebe anschweißbar ist. Außerdem ist es vorteilhaft, dass der Zylinder aus zwei Zylinderabschnitten besteht, die die gleiche Höhe aufweisen, wobei die Zylinderabschnitte jeweils aus einem gebogenen Blech bestehen und durch eine umlaufende Naht miteinander verschweißt sind. Die Bauhöhe der Zylinderabschnitte ist an die Breite handelsüblicher Blechbreiten angepasst, wodurch eine einfache, wirtschaftliche Herstellung wegen der Minimierung von Schweißnähten erreicht ist.

Zur Erhöhung der Anschlusssteifigkeit ist vorgesehen, dass in mindestens einem der Zylinderabschnitte eine Ringsteife angeordnet ist. Dabei ist es zweckmäßig, dass eine obere Ringsteife im oberen Zylinderabschnitt und eine untere Ringsteife im unteren Zylinderabschnitt nahe des unteren Randes angeordnet sind. Ebenfalls zur Erhöhung der Anschlusssteifigkeit des Zylinders sind in diesem mehrere Längssteifen vorgesehen. In besonderer Ausgestaltung wird hierzu vorgeschlagen, dass die Längssteifen jeweils aus einem unteren Abschnitt und einem oberen Abschnitt bestehen, wobei der untere Abschnitt auf der unteren Ringsteife steht und zwischen dem unteren Abschnitt und dem oberen Abschnitt die obere Ringsteife angeordnet ist. Vorzugsweise weisen die Längssteifen an ihrer der Zylindermitte zugewandten Seite eine konkave Kontur auf.

In weiterer Ausgestaltung sind an der Unterseite des Zylinders mehrere horizontale Träger angeordnet. Diese Träger ermöglichen die Anbringung einer Arbeitsplattform. Außerdem ist es zweckmäßig, dass an der Mantelfläche des Zylinders eine Öffnung vorgesehen ist, deren Größe so bemessen ist, dass der Innenraum des Zylinders für Personen zugänglich ist. Auf diese Weise kann von der Arbeitsplattform aus der Innenraum des Zylinders erreicht werden, in dem Anlagenteile, beispielsweise einer Windenergieanlage, untergebracht werden können.

Ein Ausführungsbeispiel der Erfindung ist nachstehend anhand der Zeichnung näher erläutert. In der Zeichnung zeigt:
- Fig. 1: eine perspektivische Darstellung eines Übergangsstücks mit räumlichen Kastenträgern, das an oberen Enden von Hauptstreben mittels momentenarmer Krafteinleitung befestigt ist,
- Fig. 2: das Übergangsstück mit den räumlichen Kastenträgern und den oberen Enden der Hauptstreben in der Einbaulage,
- Fig. 3: das Übergangsstück mit den räumlichen Kastenträgern und den Hauptstreben gemäß Fig. 2 in der Ansicht von unten,
- Fig. 4: eine perspektivische Ansicht der Außenseite eines Kastenträgers als Einzelteil in vergrößerter Darstellung,
- Fig. 5: eine perspektivische Ansicht der Rückseite des Kastenträgers gemäß Fig. 4,
- Fig. 6: das obere Ende einer Hauptstrebe als Einzelteil in vergrößerter Darstellung,
- Fig. 7: einen Vertikalschnitt durch das Übergangsstück gemäß Fig. 2,
- Fig. 8: eine Konstruktion aus Verstärkungselementen zur Erhöhung der Anschlusssteifigkeit , die in dem Übergangsstück angeordnet ist.
- Fig. 9: eine perspektivische Darstellung des Übergangsstücks mit einer Arbeitsplattform an den oberen Enden der Hauptstreben.

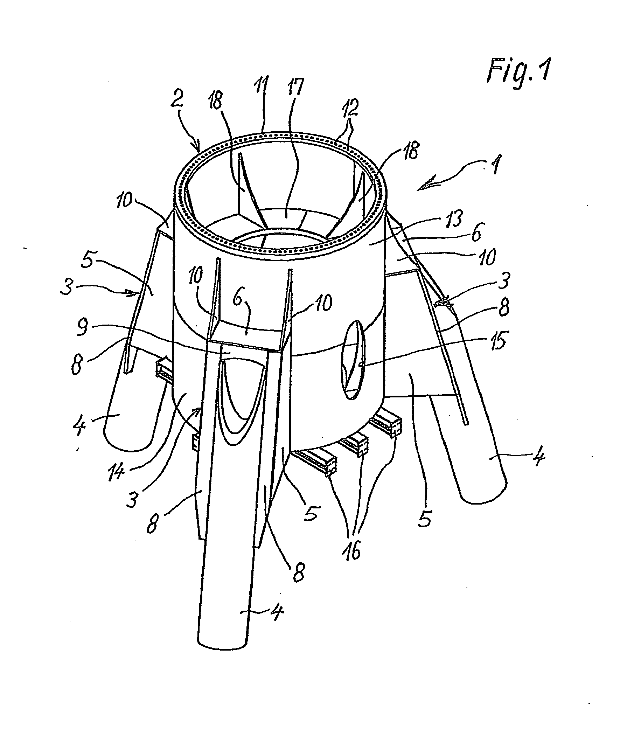

Die Fig. 1 zeigt ein Übergangsstück 1, das im Wesentlichen aus einem Zylinder 2 und an dessen Mantelfläche angeschweißten Kastenträgern 3 besteht. Im dargestellten Ausführungsbeispiel weist das Übergangsstück 1 drei um jeweils 120° versetzt angeordnete Kastenträger 3 auf, die mit oberen Enden von drei Hauptstreben 4 durch Schweißung verbunden sind. Die Enden der Hauptstreben 4 sind keilförmig zugeschnitten, um den Steifigkeitssprung in der Verbindung möglichst gering zu halten. Es ist auch möglich, die Hauptstreben 4 mit Schlitzen auszuführen.

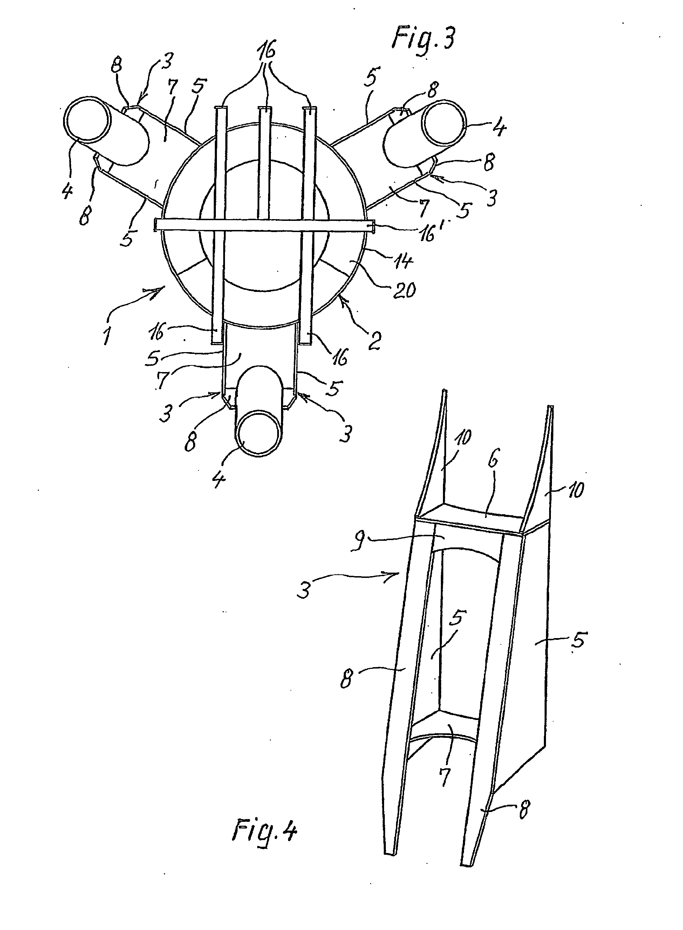

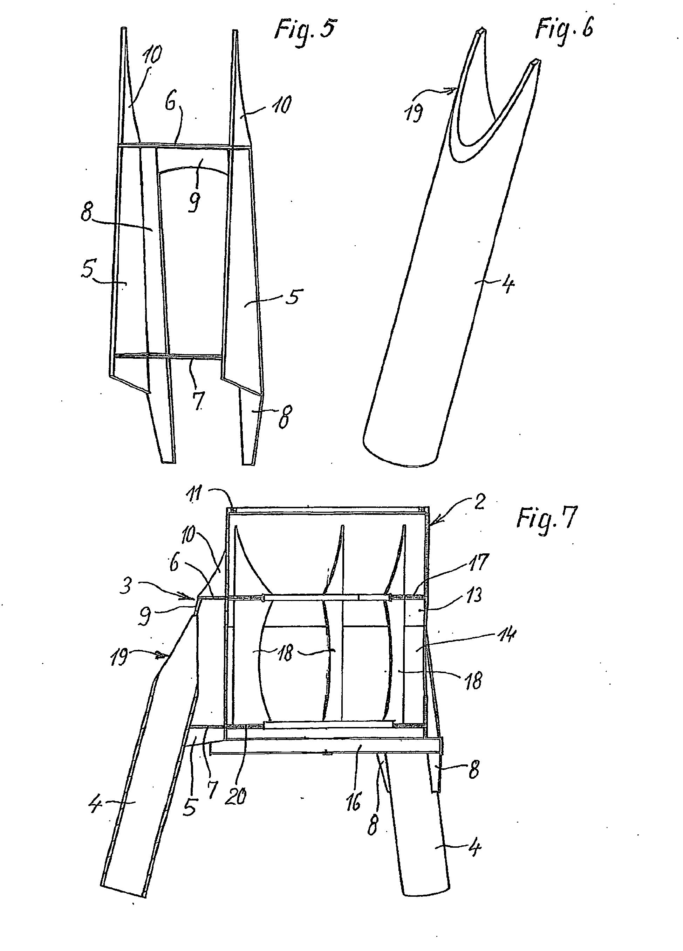

Der Kastenträger 3 besteht - wie sich insbesondere aus Fig. 4 und 5 ergibt - aus zwei Kastenseitenwänden 5, einem oberen Kastenflansch 6, einem unteren Kastenflansch 7, zwei an vorderen Kanten der Kastenseitenwände 5 angeordneten, schräg nach unten verlaufenden Stimblechen 8, einem oberen Stimblech 9 sowie zwei oberen Knieblechen 10, die in derselben vertikalen Flucht verlaufen wie die Kastenseitenwände 5 und der untere Kastenflansch 7. Die Stimbleche 8 sind mit den Kastenseitenwänden 5 bündig am oberen Kastenflansch 6, sie erstrecken sich aber weiter nach unten als die Kastenseitenwände 5. Zwischen den Stimblechen 8 ist ein Abstand vorgesehen, der dem Außendurchmesser der Hauptstrebe entspricht. Somit kann das Ende der Hauptstrebe 4 - wie in Fig. 1 gezeigt - zwischen den Seitenblechen 8 aufgenommen werden. Der untere Kastenflansch 7 hat an der nach außen gerichteten Seite eine Kontur, die der Rundung und dem Winkel der Hauptstrebe 4 angepasst ist. Beide Kastenflansche 6, 7 weisen an der zum Zylinder 2 gerichteten Seite eine Kontur auf, die dem Außenradius des Zylinders 2 entspricht. Die den Kastenträger 3 bildenden Teile bestehen aus Stahl und sind miteinander verschweißt.

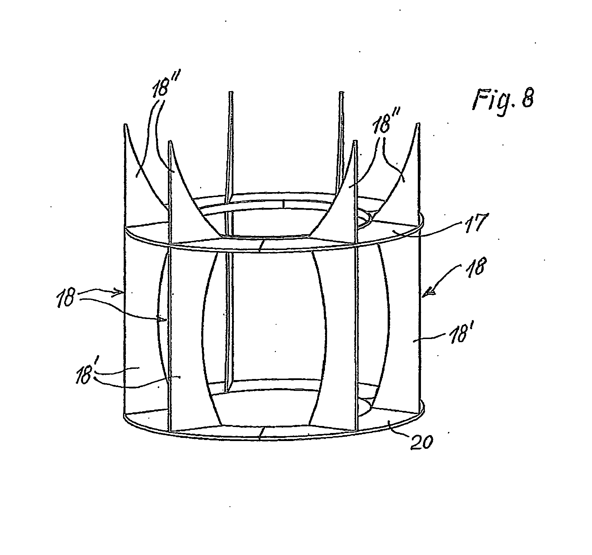

Gemäß Fig. 1 ist am oberen Rand des Zylinders 2 ein ringförmiger Flansch 11 vorgesehen, der eine Vielzahl über den Umfang verteilt angeordnete Bohrungen 12 aufweist, die zur Aufnahme von Befestigungsschrauben dienen, mit denen ein in der Zeichnung nicht dargestellter Mast einer Windenergieanlage auf dem Übergangsstück 1 befestigbar ist. Der Zylinder 2 besteht im Beispiel der Fig. 1 aus zwei übereinander angeordneten Zylinderabschnitten 13, 14, die jeweils aus einem gebogenen Blech bestehen und durch eine umlaufende Naht miteinander verschweißt sind. Aus der Darstellung in Fig. 1 geht weiter hervor, dass innerhalb des Zylinders 2 Verstärkungselemente angeordnet sind, die später zu Fig. 7 und 8 noch näher erläutert werden. An der Mantelfläche besitzt der Zylinder 2 eine Öffnung 15, durch die der Innenraum des Zylinders 2 zugänglich ist. Unter dem Zylinder 2 sind Träger 16 angeordnet, die zur Abstützung bzw. Anbringung einer Arbeitsbühne dienen.

Aus Fig. 1 ist die Verbindung des Zylinders 2 mit den Hauptstreben 4 mittels der Kastenträger 3 ersichtlich, wobei die Anbindung der Kastenträger 3 durch Anschweißen der Stimbleche 8 an die Hauptstreben 4 und Anschweißen der Kastenseitenwände 5 und Kniebleche 10 an die Mantelfläche der Zylinderabschnitte 13, 14 erfolgt. Ebenso werden die oberen Kastenflansche 6 und die in Fig. 1 nicht sichtbaren unteren Kastenflansche an die Zylinderabschnitte 13, 14 geschweißt. In den Lasteinleitungsbereichen ist der Zylinder 2 durch umlaufende Ringsteifen und vertikal verlaufende Längssteifen verstärkt, worauf später noch näher eingegangen wird. In Fig. 1 ist lediglich ein Ausschnitt einer oberen Ringsteife 17 und von zwei Längssteifen 18 gezeigt.

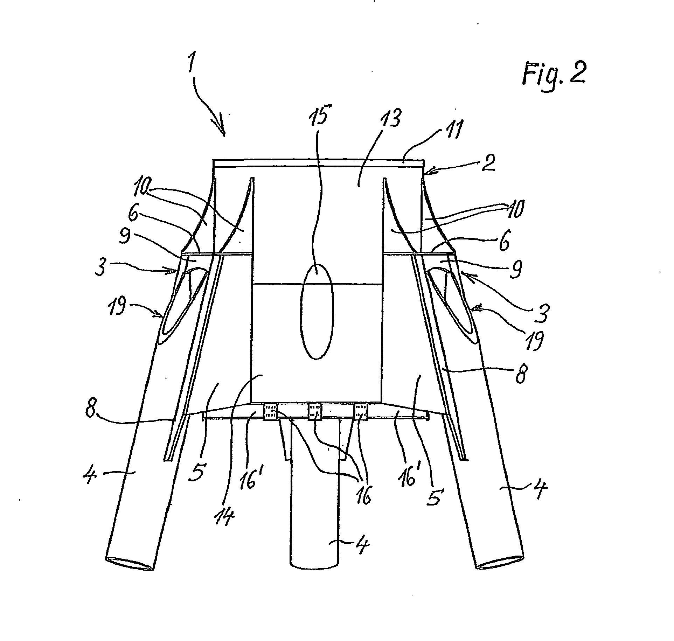

Die Fig. 2 zeigt das Übergangsstück 1 in der Einbaulage auf oberen Enden der Hauptstreben 4, wobei die Kastenträger 3 den Zylinder 2 mit den Hauptstreben 4 verbinden. Aus Fig. 2 in Verbindung mit Fig. 6 ist ersichtlich, dass die Hauptstreben 4 einen keilförmigen Zuschnitt 19 aufweisen, wodurch die rohrförmigen Hauptstreben 4 oben offen sind. Diese Öffnungen können mittels dafür vorgesehener Deckel geschlossen werden. Der keilförmige Zuschnitt der Stabenden erfolgt, um den Steifigkeitssprung in der Verbindung mit dem Kastenträger möglichst gering zu halten. Aus Fig. 2 ist weiter ersichtlich, dass nicht nur in Längsrichtung verlaufende Träger vorgesehen sind, sondern auch orthogonal angeordnete Träger 16'. Im Übrigen stimmen für gleiche Teile die Bezugszeichen mit denjenigen der Fig. 1 überein.

In Fig. 3 ist das Übergangsstück 1 in der Ansicht von unten dargestellt. Der Zylinder 2 ist mittels der Kastenträger 3 mit den Hauptstreben 4 verbunden, wobei die Kastenseitenwände 5 an den Zylinder 2 und an die Stimbleche 8 sowie die Stimbleche 8 ihrerseits an die Hauptstreben 4 angeschweißt sind. In dem unteren Zylinderabschnitt 14 ist eine untere Ringsteife 20 angeordnet. Außerdem ist ersichtlich, dass zu den Trägern 16 orthogonal verlaufend ein Träger 16' vorgesehen ist. In Fig. 3 sind auch die unteren Kastenflansche 7 sichtbar. Die unteren Kastenflansche 7 schließen den Innenraum des Kastenträgers 3 nach unten ab, wobei der keilförmige Zuschnitt der Hauptstrebe 4 oberhalb des unteren Kastenflanschs 7 angeordnet ist.

Die Fig. 6 zeigt in vergrößerter Darstellung das obere Ende der Hauptstrebe 4 mit dem keilförmigen Zuschnitt 19.

In Fig. 7 ist ein Vertikalschnitt durch das Übergangsstück 1 gemäß Fig. 2 gezeigt. Der Zylinder 2 besteht aus zwei gleich hohen Zylinderabschnitten 13, 14. Alternativ hierzu können die Zylinderabschnitte auch unterschiedliche Höhen aufweisen. An der Oberkante des Zylinders 2 befindet sich der Flansch 11. Auf der linken Seite in Fig. 7 ist die Hauptstrebe 4 mit dem keilförmigen Zuschnitt 19 zu sehen, wobei dieses Ende in den Kastenträger 3 ragt. Der keilförmige Zuschnitt 19 befindet sich oberhalb des unteren Kastenflansches 7 und reicht bis an die Unterkante des oberen Stimblechs 9. In dem Zylinder 2 sind mehrere Längssteifen 18 sowie im oberen Zylinderabschnitt 13 eine obere Ringsteife 17 und im unteren Zylinderabschnitt 14 nahe des unteren Randes eine untere Ringsteife 20 angeordnet. Diese dienen zum einen der Beulaussteifung des Zylinders 2 und zum anderen der Übertragung von konzentrierten Lasten in den angeschweißten Kastenträger 3. Unter dem Zylinder 2 sind die Träger 16 angebaut.

Die Fig. 8 zeigt eine Konstruktion aus vertikalen Längssteifen 18 und der oberen Ringsteife 17 sowie der unteren Ringsteife 20. Die Längssteifen 18 bestehen jeweils aus einem unteren Abschnitt 18', der auf der unteren Ringsteife 20 steht und einem oberen Abschnitt 18", wobei zwischen den unteren Abschnitten 18' und den oberen Abschnitten 18" die obere Ringsteife 17 angeordnet ist. Die gesamte Konstruktion ist in den Zylinder 2 und insgesamt (vgl. Fig. 7) verschweißt.

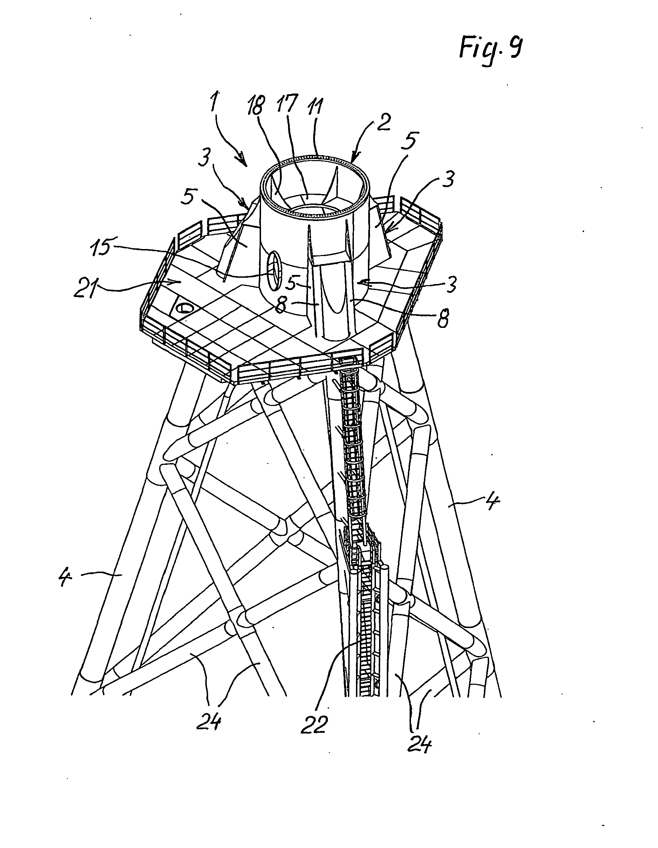

In Fig. 9 ist in perspektivischer Darstellung das Übergangsstück 1 auf einer gitterartigen Gründungsstruktur, die Hauptstreben 4 und Querstreben 24 umfasst, mit einer Arbeitsplattform 21 dargestellt. Das Übergangsstück 1 in Form eines Zylinders ist mit den Kastenträgem 3 versehen, das heißt die Kastenträger 3 sind an den Zylinder 2 angeschweißt. Die Kastenträger 3 sind ebenso mit den Hauptstreben 4 durch Schweißen verbunden, so dass eine Last aufnehmende Anbindung des Übergangsstücks an die Hauptstreben 4 gegeben ist. Der überwiegende Teil der Last wird von den Kastenseitenwänden 5 und den Stimblechen 8 aufgenommen. Die Krafteinleitung erfolgt dabei über Schub in den Schweißnähten zwischen Zylinder 2 und Kastenseitenwänden 5, die Kraftausleitung über die Schweißnähte zwischen Stirnblechen 8 und Hauptstrebe 4. Das Versatzmoment sowie das Moment infolge unterschiedlicher Wirkungsrichtung beider Schubkräfte zur Kraftein- und -ausleitung wird vorzugsweise über den oberen Kastenflansch 6 und unteren Kastenflansch 7 (vgl. Fig. 4) des Kastenträgers 3 als Zug-/Druck-Kräftepaar aufgenommen. Infolge des geringen Versatzes zwischen der Längsachse des auf dem Übergangsstück 1 zu montierenden Turms oder Masts und der Achse der Hauptstreben 4 ist das aufzunehmende Versatzmoment relativ klein. Die Arbeitsplattform ist bezüglich des Übergangsstücks 1 auf die Lage der Öffnung 15 abgestimmt, so dass Personen mühelos durch die Öffnung ins Innere des Zylinders 2 treten können. Die Arbeitsplattform 21 ist über eine Leiter 22 erreichbar. Am oberen Ende des Zylinders 2 ist der Flansch 11 vorgesehen und im Zylinder 2 sind die obere Ringsteife 17 und Längssteifen 18 erkennbar.

## Patentansprüche

1. Übergangsstück (1) zur Verbindung eines Turm- oder Mastfußes mit dem oberen Ende einer gitterartigen Gründungsstruktur im Offshore-Bereich mit mindestens drei Hauptstreben (4), wobei das Übergangsstück (1) einen Zylinder (2) und Verbindungsmittel umfasst, wobei der Zylinder (2) an seinem oberen Ende einen Flansch (11) zur Abstützung des Turm- oder Mastfußes aufweist und an seiner Mantelfläche mit den Verbindungsmitteln zur Einleitung der einwirkenden Kräfte in die aus Hauptstreben (4) und Querstreben (24) bestehende Gründungsstruktur versehen ist, wobei die Verbindungsmittel als räumliche Kastenträger (3) gestaltet sind, in denen obere Enden der Hauptstreben (4) aufgenommen werden und der Kastenträger (3) zwei vertikale Kastenseitenwände (5) umfasst,
**dadurch gekennzeichnet, dass** der Kastenträger (3) einen oberen Flansch (6) und einen unteren Kastenflansch (7) umfasst, wobei die Kastenseitenwände (5) mit den Kastenflanschen (6, 7) verschweißt sind, und dass an vorderen Kanten der Kastenseitenwände (5) schräg nach unten verlaufende Stimbleche (8) angeordnet und an diesen angeschweißt sind und zwischen den Stimblechen (8) ein Abstand vorgesehen ist, der dem Außendurchmesser der Hauptstrebe (4) entspricht, und dass auf dem oberen Kastenflansch (6) zwei bündig zu den Kastenseitenwänden (5) verlaufende Kniebleche (10) vorgesehen sind, die mit dem Kastenflansch (6) und dem Zylinder (2) verschweißt sind.

2. Übergangsstück nach Anspruch 1,
**dadurch gekennzeichnet, dass** der obere Kastenflansch (6) und der untere Kastenflansch (7) auf ihrer dem Zylinder (2) zugewandten Seite eine Kontur aufweisen, die dem Außendurchmesser des Zylinders (2) entspricht.

3. Übergangsstück nach Anspruch 2,
**dadurch gekennzeichnet, dass** die Kastenseitenwände (5) und die Kastenflansche (6, 7) an dem Zylinder (2) angeschweißt sind.

4. Übergangsstück nach Anspruch 2 oder 3,
**dadurch gekennzeichnet, dass** der untere Kastenflansch (7) an seiner der Hauptstrebe (4) zugewandten Seite eine Kontur aufweist, die dem Außendurchmesser und dem Winkel der Hauptstrebe (4) entspricht, so dass der untere Kastenflansch (7) an der Hauptstrebe (2) anschweißbar ist.

5. Übergangsstück nach einem der Ansprüche 1 bis 4,
**dadurch gekennzeichnet, dass** der Zylinder (2) aus mindestens zwei Zylinderabschnitten (13, 14) besteht, die die gleiche oder unterschiedliche Höhen aufweisen, wobei die Zylinderabschnitte (13, 14) jeweils aus einem gebogenen Blech bestehen, und durch eine umlaufende Naht miteinander verschweißt sind.

6. Übergangsstück nach Anspruch 5,
**dadurch gekennzeichnet, dass** in mindestens einem der Zylinderabschnitte (13, 14) zumindest eine Ringsteife (17, 20) angeordnet ist.

7. Übergangsstück nach Anspruch 6,
**dadurch gekennzeichnet, dass** eine obere Ringsteife (17) im oberen Zylinderabschnitt (13) und eine untere Ringsteife (20) im unteren Zylinderabschnitt (14) nahe dem unteren Rand dieses Zylinderabschnitts (14) angeordnet sind.

8. Übergangsstück nach einem der Ansprüche 5 bis 7,
**dadurch gekennzeichnet, dass** im Zylinder (2) mehrere Längssteifen (18) vorgesehen sind.

9. Übergangsstück nach Anspruch 7 und 8,
**dadurch gekennzeichnet, dass** die Längssteifen (18) jeweils aus einem unteren Abschnitt (18') und einem oberen Abschnitt (18") bestehen, wobei der untere Abschnitt (18') auf der unteren Ringsteife (20) steht und zwischen dem unteren Abschnitt (18') und dem oberen Abschnitt (18") die obere Ringsteife (17) angeordnet ist.

10. Übergangsstück nach Anspruch 8 oder 9,
**dadurch gekennzeichnet, dass** die Längssteifen (18) an ihrer der Zylindermitte zugewandten Seite eine konkave Kontur aufweisen.

11. Übergangsstück nach einem der Ansprüche 1 bis 10,
**dadurch gekennzeichnet, dass** an der Unterseite des Zylinders (2) mehrere horizontale Träger (16, 16') angeordnet sind.

12. Übergangsstück nach einem der Ansprüche 1 bis 11,
**dadurch gekennzeichnet, dass** an der Mantelfläche des Zylinders (2) eine Öffnung (15) vorgesehen ist, deren Größe so bemessen ist, dass der Innenraum des Zylinders (2) für Personen zugänglich ist.

## Claims

1. Transition piece (1) for connecting a tower or mast base to the upper end of a grid-like foundation structure in the offshore area, having at least three main struts (4), wherein the transition piece (1) comprises a cylinder (2) and connecting means, wherein the cylinder (2) has, at its upper end, a flange (11) to support the tower or mast base and is provided, on its shell surface, with the connecting means to introduce the forces arising into the foundation structure consisting of main struts (4) and transverse struts (24), wherein the connecting means are designed as spatial box girders (3), in which upper ends of the main struts (4) are accommodated and the box girder (3) comprises two vertical box side walls (5),
**characterised in that** the box girder (3) comprises an upper flange (6) and a lower box flange (7), wherein the box side walls (5) are welded to the box flanges (6, 7), and end plates (8) extending downwardly in an inclined manner are arranged on front edges of the box side walls (5) and welded thereto, and a distance is provided between the end plates (8) which corresponds to the outer diameter of the main struts (4), and two brackets (10) extending flush with the box side walls (5) are provided on the upper box flange (6) which are welded to the box flange (6) and the cylinder (2).

2. Transition piece according to claim 1,
**characterised in that** the upper box flange (6) and the lower box flange (7) have, on their side facing the cylinder (2), a contour which corresponds to the outer diameter of the cylinder (2).

3. Transition piece according to claim 2,
**characterised in that** the box side walls (5) and the box flanges (6, 7) are welded to the cylinder (2).

4. Transition piece according to claim 2 or 3,
**characterised in that** the lower box flange (7) has, on its side facing the main strut (4), a contour corresponding to the outer diameter and to the angle of the main strut (4) so that the lower box flange (7) can be welded to the main strut (2).

5. Transition piece according to one of the claims 1 to 4,
**characterised in that** the cylinder (2) consists of at least two cylinder sections (13, 14) which have the same or different heights, wherein the cylinder sections (13, 14) each consist of a bent plate and are welded to each other through a surrounding seam.

6. Transition piece according to claim 5,
**characterised in that** at least one ring stiffener (17) is arranged in at least one of the cylinder sections (13, 14).

7. Transition piece according to claim 6,
**characterised in that** an upper ring stiffener (17) is arranged in the upper cylinder section (13) and a lower ring stiffener (20) is arranged in the lower cylinder section (14) close to the bottom edge of this cylinder section (14).

8. Transition piece according to one of the claims 5 to 7,
**characterised in that** a plurality of longitudinal stiffeners (18) are provided in the cylinder (2).

9. Transition piece according to claims 7 and 8,
**characterised in that** the longitudinal stiffeners (18) each consist of a lower section (18') and an upper section (18"), wherein the lower section (18') is on the lower ring stiffener (20), and the upper ring stiffener (17) is arranged between the lower section (18') and the upper section (18").

10. Transition piece according to claim 8 or 9,
**characterised in that** the longitudinal stiffeners (18) have a concave contour on their side facing the middle of the cylinder.

11. Transition piece according to one of the claims 1 to 10,
**characterised in that** a plurality of horizontal carriers (16, 16') are arranged on the lower side of the cylinder (2).

12. Transition piece according to one of the claims 1 to 11,
**characterised in that** an opening (15) is provided on the shell surface of the cylinder (2), of which the size is such that the inner space of the cylinder (2) is accessible to persons.

## Revendications

1. Pièce de transition destinée à relier un pied de tour ou de mât à l'extrémité supérieure d'une structure de fondation en treillis dans la zone en mer, avec au moins trois jambes de force principales (4), étant précisé que la pièce de transition (1) comprend un cylindre (2) et des moyens de liaison, que le cylindre (2) présente à son extrémité supérieure un rebord (11) pour l'appui du pied de tour ou de mât et est pourvu, sur sa surface latérale, des moyens de liaison destinés à introduire les forces agissantes dans la structure de fondation composée des jambes de force principales (4) et d'entretoises (24), que les moyens de liaison sont conçus comme des poutres caissons (3) dans l'espace, dans lesquelles sont logées les extrémités supérieures des jambes de force principales (4), et que la poutre caisson (3) comprend deux parois latérales de caisson verticales (5),
**caractérisée en ce que** la poutre caisson (3) comprend un rebord supérieur (6) et un rebord de caisson inférieur (7), étant précisé que les parois latérales de caisson (5) sont soudées aux rebords de caisson (6, 7), et **en ce que** des tôles frontales (8) qui s'étendent en biais vers le bas sont disposées sur les bords avant des parois latérales de caisson (5) et sont soudées à celles-ci, et il est prévu entre les tôles frontales (8) une distance qui correspond au diamètre extérieur de la jambe de force principale (4), et **en ce qu'**il est prévu sur le rebord de caisson supérieur (6) deux goussets (10) qui sont dans l'alignement des parois latérales de caisson (5) et qui sont soudés au rebord de caisson (6) et au cylindre (2).

2. Pièce de transition selon la revendication 1,
**caractérisée en ce que** le rebord de caisson supérieur (6) et le rebord de caisson inférieur (7) présentent, sur leur côté tourné vers le cylindre (2), un contour qui correspond au diamètre extérieur du cylindre (2).

3. Pièce de transition selon la revendication 2,
**caractérisée en ce que** les parois latérales de caisson (5) et les rebords de caisson (6, 7) sont soudés au cylindre (2).

4. Pièce de transition selon la revendication 2 ou 3,
**caractérisée en ce que** le rebord de caisson inférieur (7) présente, sur son côté tourné vers la jambe de force principale (4), un contour qui correspond au diamètre extérieur et à l'angle de la jambe de force principale (4), de sorte que le rebord de caisson inférieur (7) est apte à être soudé à la jambe de force principale (2).

5. Pièce de transition selon l'une des revendications 1 à 4,
**caractérisée en ce que** le cylindre (2) se compose d'au moins deux tronçons de cylindre (13, 14) qui présentent la même hauteur ou des hauteurs différentes, étant précisé que les tronçons de cylindre (13, 14) se composent chacun d'une tôle courbe et sont soudés entre eux par une soudure périphérique.

6. Pièce de transition selon la revendication 5,
**caractérisée en ce qu'**au moins un raidisseur annulaire (17, 20) est disposé dans l'un au moins des tronçons de cylindre (13, 14).

7. Pièce de transition selon la revendication 6,
**caractérisée en ce qu'**un raidisseur annulaire supérieur (17) est disposé dans le tronçon de cylindre supérieur (13), et un raidisseur annulaire inférieur (20) est disposé dans le tronçon de cylindre inférieur (14) près du bord inférieur dudit tronçon de cylindre (14).

8. Pièce de transition selon l'une des revendications 5 à 7,
**caractérisée en ce qu'**il est prévu plusieurs raidisseurs longitudinaux (18) dans le cylindre (2).

9. Pièce de transition selon les revendications 7 et 8,
**caractérisée en ce que** les raidisseurs (18) se composent chacun d'un tronçon inférieur (18') et d'un tronçon supérieur (18"), étant précisé que le tronçon inférieur (18') se trouve sur le raidisseur annulaire inférieur (20) et que le raidisseur annulaire supérieur (17) est disposé entre le tronçon inférieur (18') et le tronçon supérieur (18").

10. Pièce de transition selon la revendication 8 ou 9,
**caractérisée en ce que** les raidisseurs longitudinaux (18) présentent, sur leur côté tourné vers le centre du cylindre, un contour concave.

11. Pièce de transition selon l'une des revendications 1 à 10,
**caractérisée en ce que** plusieurs supports horizontaux (16, 16') sont disposés sur le côté inférieur du cylindre (2).

12. Pièce de transition selon l'une des revendications 1 à 11,
**caractérisée en ce qu'**il est prévu sur la surface latérale du cylindre (2) une ouverture (15) dont la taille est calculée pour que l'espace intérieur du cylindre (2) soit accessible à des personnes.
